# EUROPEAN PATENT APPLICATION

(11) **EP 4 152 074 A1**
(43) Date of publication of application: **22.03.2023**
(21) Application number: 21197641.0
(22) Date of filing: 20.09.2021
(51) Int. Cl.: G02B 21/00, G02B 21/33, G01N 35/10, B01L 3/02

(54) **MICROSCOPE SYSTEM AND METHOD FOR IMAGING A SAMPLE INVOLVING INJECTING MULTIPLE TEMPORALLY SPACED MICROJETS**

(71) Applicant: Leica Microsystems CMS GmbH, 35578 Wetzlar (DE)
(72) Inventor: FAHRBACH, Florian, 68167 Mannheim (DE); SIMMER, Sebastian, 35649 Bischoffen (DE); CHRIST, Stefan, 35641 Schöffengrund (DE); ANSARI, Nariman, 63067 Offenbach am Main (DE)
(74) Representative: Schaumburg und Partner Patentanwälte mbB

(57) **Abstract**

A microscope system (100) comprising a microscope stage (110) having a top surface (108) configured to have a sample carrier (106) arranged thereon. The sample carrier (106) is configured to receive at least one sample (502). The microscope system (100) further comprises an imaging system (112) configured to image the sample (502), and an injection device (116) configured to inject a predetermined amount of a liquid into the sample carrier (106) by injecting multiple successive and temporally spaced jets (1002) of the liquid into the sample carrier (106), each jet (1002) comprising a predetermined portion of the amount of liquid.

## Description

### Technical field

The invention relates to microscope system. The invention further related to a method for imaging a sample with a microscope system.

### Background

Experiments in the life sciences often involve the microscopic study of samples that were or are being been manipulated or treated with various chemicals called reagents in order to study and understand biological processes. These experiments typically involve injecting a reagent into the sample or its sample container, in order to study the reaction of the sample to the chemical stimulus. There exist two broad categories of devices for performing the injection. So-called micro-injectors comprise a very fine needle that is used to deliver a small amount, typically only a few nanoliters, of a liquid into a cell through its cell wall. The injection is performed under observation with a microscope. This allows the reaction of the sample to be studied in real time, but requires human interaction. Microplate dispensers are dedicated devices that enable automated, precise dispensing of liquids and reagents into a variety of microplates. However, the microscopic observation of the prepared microplates takes place on a different device and is therefore temporally separated from the injection. There also exist injection modules for microscopes which combine a microplate dispenser with a digital microscope for fluorescence, bright-field, color-bright-field and phase-contrast imaging of fixed samples arranged in wells of microtiter plates.

One disadvantage of all known devices is that they are unsuited for fast volumetric imaging. In particular, the known devices are not suitable for working with sensitive, three-dimensional samples such as organoids or organisms such as zebrafish or Drosophilae, which cannot be readily mechanically fixed to a bottom of the sample carrier. These unfixed samples are easily moved during the injection due to turbulence. Thus, as far as living biological samples are examined, the known devices limited to adherent two-dimensional cell cultures or mechanically fixated samples, since the sensitivity of such samples to turbulence and flow from injection is low.

There are basically two ways to deal with the fact that the position of the sample is changing during injection: On the one hand, correction of the position of the sample relative to the observation volume in real time, and on the other hand the subsequent correction of the position. If the response of the sample to the chemical stimulus is to be measured immediately, i.e. less than 1 s after the injection, the correction has to take place in real time. Real time correction requires a fast transmission illumination channel, which acquires a low-resolution image of the sample volume at high speed and measures any change in the position of the sample. The changes in position of the sample are analyzed and then commands are sent to the stage of the microscope, causing a correction of the position such that the sample remains in the center of the field of view. Alternatively, if, for example, the development of the samples is to be observed over several minutes or hours after a reagent has been added to several wells of plate, each well of the plate can be scanned again after the injection in order to take images of the wells in transmitted light mode and to determine the new position of the samples in the wells. However, for more than one sample per well the turbulence may lead to a mixture of the samples and render subsequent allocation difficult or even impossible.

Both alternatives have their disadvantages. The first method requires hardware adaptation, fast image evaluation, and feedback to the stage controller. Even if the solution is technically feasible, it is highly costly and requires a lot of development effort. The second method may imply significant limitations in terms of feasibility of certain experiments, such as measuring the response during and immediately after injection. Further, a movement of the sample often rotates the sample as well. It is unlikely that the same surface of the sample will still be facing the detection optics after the movement. In this case, a software-based tracking is extremely difficult and usually not possible at all.

### Summary

It is therefore an object to provide a microscope system that allows to observe the reaction of a loosely mounted sample to a chemical stimulus in real time.

The aforementioned object is achieved by the subject-matter of the independent claims. Advantageous embodiments are defined in the dependent claims and the following description.

The proposed microscope system comprises a microscope stage having a top surface configured to have a sample carrier arranged thereon. The sample carrier is configured to receive at least one sample. The proposed microscope system further comprises an imaging system configured to image the sample, and an injection device configured to inject a predetermined amount of a liquid into the sample carrier by injecting multiple successive and temporally spaced jets of the liquid into the sample carrier, each jet comprising a predetermined portion of the amount of liquid.

The sample is typically received in an embedding medium such as water, an inorganic salt buffer, a water-based and matrix-free growth medium or another cell culture medium. A liquid solution is added to the embedding medium in order to stimulate the sample. Adding the liquid to the embedding medium causes turbulence in the embedding medium. This turbulence can move the sample, if it is not fixed to the sample carrier, or cause shear stress in case of a fixed sample. The amount of turbulence is determined by a number of factors, but one of the main factors is the amount of liquid injected. The more liquid is injected, the more turbulence is caused. By injecting the liquid in subsequent jets, each jet comprising just a small amount of the liquid, the turbulence caused by each jets is reduced. Further, since the jets are injected temporally spaced, the turbulence caused by each jets is allowed to dissipate. Thereby, the overall amount of turbulence is also reduced. With reduced turbulence the movement of the sample and/or shear stress the sample is subjected to is also reduced. The proposed microscope therefore allows to observe the reaction of the sample, in particular of a non-fixed specimen, to the reagent in real time. Further, since the sample is essentially stationary after the injection, volumetric imaging techniques may be used to generate a three-dimensional image of the sample during and shortly after the injection process without the need for real-time repositioning of the sample relative to the observation volume.

The sample carrier may be a microplate, a petri-dish, a microscope slide, a chamber slide or any other suitable sample carrier geometry. In particular, the needle has a gauge between 19 and 22. The point style may in particular be style b or style AS.

In a preferred embodiment, the microscope system has a control unit configured to predetermine at least one control parameter, in particular at least one of the following the size of a portion, the number of jets, and the interval between two immediately successive jets; and to control the injection of the jets based on the at least one control parameter. In this embodiment, the at least one control parameter can be controlled, for example by a user input. Alternatively, or additionally, the at least one control parameter may be determined by a functional relationship or look-up table, correlating the at least one control parameter to a number of other parameters related to the sample carrier and/or the experiment in question. This allows the injection of the jets to be customized to the individual sample carrier and the conditions of the experiment in question. Thereby, a large number of sample carriers can be used in a variety of experiments making the microscope system more versatile.

In another preferred embodiment, the control unit comprises a memory element. The memory element comprises a look-up table which correlates at least one sample carrier information with the at least one control parameter. The control unit is configured to predetermine the at least one control parameter based a user input of a value of the at least one sample carrier information, and based on the look-up table. In particular, the sample carrier information comprises at least one of the following a sample carrier type, a sample carrier size, a sample carrier volume, a multi-well type, a number of wells, and a well volume. The look-up table may be determined in advance by the manufacturer. Additionally, or alternatively, it is also possible to allow the user to modify the look-up table and customize the look-up table to their own need. In this embodiment, the at least one control parameter is set indirectly via the at least one sample carrier information. Typically, the at least one sample carrier information is more readily available to the user. Thereby, the ease of use of the microscope system is vastly increased.

Preferably, the control unit is configured to predetermine the at least one control parameter such that the sample is not moved inside or out of the field of view of the imaging system during the injection of the jets. Whether the sample is moved out of the field of view during the injection depends on the value of the at least one control parameter. Values of the at least one control parameter for different values of the sample carrier information which do not move the sample can be determined experimentally and saved in the look-up table. Alternatively, or additionally, a functional dependence may be determined in advance and stored in the memory element.

In another preferred embodiment, the imaging system is configured to capture at least one image of the sample during the injection of the liquid. Thereby, the reaction of the sample to the chemical stimulus can be studied with no delay. This may be required in certain types of experiments, in particular studies of neural tissues. Thus, the present embodiment is very versatile.

In another preferred embodiment, each portion of liquid comprises less than 10 µL of the liquid, in particular less than 5 µL. Injecting the liquid in portions of less than 10 µL causes little to no turbulence in most sample carriers.

In another preferred embodiment, the interval between two immediately successive jets is at least 0.5 s and at most 1.5 s. Turbulence dissipates over time. The lower limit of about 0.5 s is enough time for turbulence to dissipate in most sample carriers. The upper limit of 1.5 s is still short enough that an observation of the reaction of the sample can take place in real time.

In another preferred embodiment, the injection device comprises at least one needle which has an angled tip section. Preferably, the tip section of the needle is bent at least 30° and at most 90°. Needles with an angled tip section can be better installed in small installation spaces such as a sample chamber of the microscope system. The angled tip section also further reduces the turbulence caused by injecting the jets.

In another preferred embodiment, the tip section of the needle and the top surface of the microscope stage enclose an angle of at least 10° and at most 85°. In particular, the tip section of the needle and the top surface of the microscope stage enclose an angle of at least 10° and at most 50°. By injecting the liquid at an angle, i.e. not directly from above, the liquid injected into the sample carrier impinges on a larger cross-sectional area and can travel a longer distance inside the embedding medium. Due to both aspects, the turbulence caused by the injected liquid can dissipate more quickly, especially at shallow depths. Thus, the disturbance of the sample caused by the injected liquid is minimized. However, injecting the liquid at too shallow of an angle causes the jet to disperse which might lead to loss of liquid and thereby inaccurate injection volumes.

In another preferred embodiment, a flow rate of the liquid is at least 5 µL/s and at most 250 µL/s. In particular, the flow rate of the liquid is at least 10 µL/s and at most 100 µL/s. The flow rate has to be high enough to guarantee a clean drop break-off at the end of the injection. In other words, the injected liquid needs to detach/separate fully from the tip, and it needs to be ensured that none of the injected liquid remains sticking to the tip. However, the higher the flower rate is, the higher the forces exerted on the sample by the injected liquid are. The above ranges represent a good compromise that allows for a clean drop break-off/detachment/separation while having a low enough flow rate that does not significantly moves the sample.

In another preferred embodiment, the injection device comprises a temperature control unit configured to control the temperature of the liquid. Injecting the liquid into the sample carrier not only changes the chemical environment of the sample but also the temperature. In some experiment, in particular experiments requiring careful incubation of the samples, a sudden change in temperature can have unwanted side effects. The temperature control can be achieved by thermally coupling the tube between the pump and the injection tip to a temperature reservoir, e.g. running the tube around/through a temperature-controlled block of metal. In this embodiment, these side effects are avoided, such that the observed reaction of the sample to the injection is the reaction of the chemical stimulus alone.

In another preferred embodiment, the microscope system comprises a box-type microscope housing defining a sample chamber. The housing has a door for providing access to the sample chamber. The microscope stage is arranged at the bottom the sample chamber. The sample carrier is received inside the sample chamber. Box-type microscopes comprise a housing in which all the microscopes components are arranged. The housing typically comprises one or more openings for accessing the inside of the microscope. Due to the enclosed or even sealed nature of the housing, box-type microscopes are especially suited for precisely controlling the environment of the samples, for example by a climate control unit.

The invention further relates to a method for imaging a sample with a microscope system. The method comprises the following steps: Arranging the sample inside a sample carrier. Arranging the sample carrier on top of a microscope stage of the microscope system. Injecting a predetermined amount of a liquid into the sample carrier by injecting multiple successive and temporally spaced jets of the liquid into the sample carrier, each jet comprising a predetermined portion of the amount of liquid. Capture at least one image of the sample with an imaging system of the microscope system during the injection of the liquid.

The method has the same advantages as the sample carrier and the imaging system described above and can be supplemented using the features of the dependent claims directed at the sample carrier and the imaging system.

In a preferred embodiment, the method comprises the following additional steps: Predetermining at least one control parameter, in particular at least one of the following the size of a portion, the number of jets, and the interval between two immediately successive jets. Performing the injection of the jets based on the at least one control parameter.

In another preferred embodiment, the at least one control parameter is predetermined based on a user input of a value of at least one sample carrier information, and based on a look-up table which correlates the at least one sample carrier information with the at least one control parameter.

In another preferred embodiment, the at least one control parameter is predetermined such that the sample is not moved out of the field of view of the imaging system during the injection of the jets.

In another preferred embodiment, each portion of liquid comprises less than 10 µL of the liquid.

In another preferred embodiment, the interval between two immediately successive jets is at least 0.5 s and at most 1.5 s.

In another preferred embodiment, the injection is performed with at least one needle which has an angled tip section.

In another preferred embodiment, the tip section of the needle is bent at least 30° and at most 90°.

In another preferred embodiment, the jets are injected into the sample carrier at an angle of at least 10° and at most 85° with respect to the top surface of the microscope stage. In particular, the jets are injected into the sample carrier at an angle of at least 10° and at most 50° with respect to the top surface of the microscope stage.

In another preferred embodiment, a flow rate of the liquid is at least 5 µL/s and at most 250 µL/s. In particular, the flow rate of the liquid is at least 10 µL/s and at most 100 µL/s.

### Short Description of the Figures

Hereinafter, specific embodiments are described referring to the drawings, wherein:
- Figure 1: is a schematic view of a microscope system according to an embodiment;
- Figure 2: is a schematic top view of the sample chamber of the microscope system according to Figure 1;
- Figure 3: is a schematic front view of the sample chamber of the microscope system according to Figures 1 and 2;
- Figure 4: is a schematic side view of the sample chamber of the microscope system according to Figures 1 to 3;
- Figure 5: is a schematic detail view of the sample chamber of the microscope system according to Figures 1 to 4;
- Figure 6: is a schematic detail view of the sample chamber of the microscope system according to another embodiment;
- Figure 7: is a schematic top view of the sample chamber of the microscope system according an embodiment;
- Figure 8: is a schematic top view of the sample chamber of the microscope system according an embodiment;
- Figure 9: is a schematic top view of the sample chamber of the microscope system according an embodiment;
- Figure 10: is a schematic view of the sample carrier and the tip section of the needle;
- Figure 11: shows two schematic top views of the sample carrier; and
- Figure 12: is a graph showing the flow speed of the liquid expelled from the tip section over time.

### Detailed Description

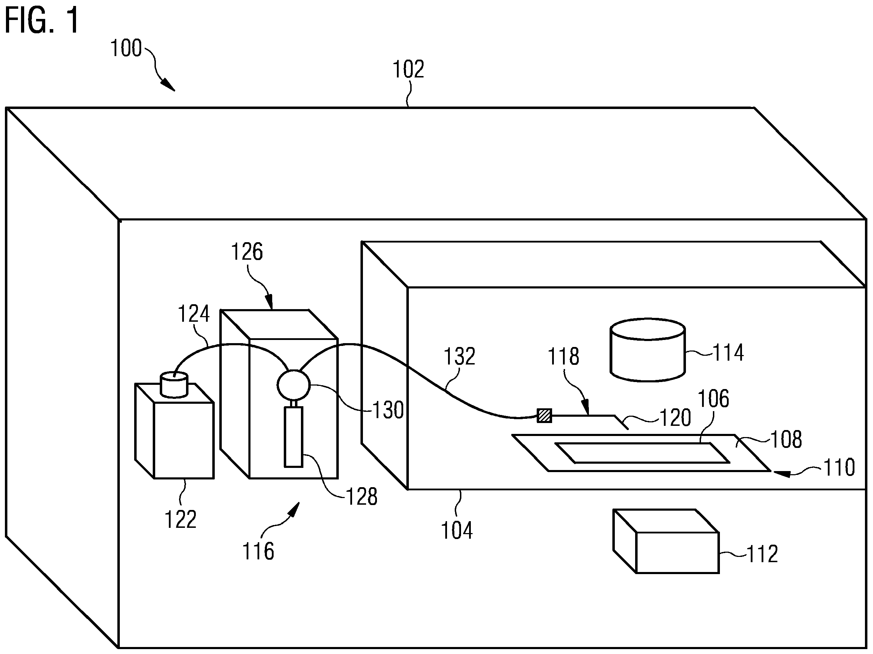

Figure 1 is a schematic view of a microscope system 100 according to an embodiment.

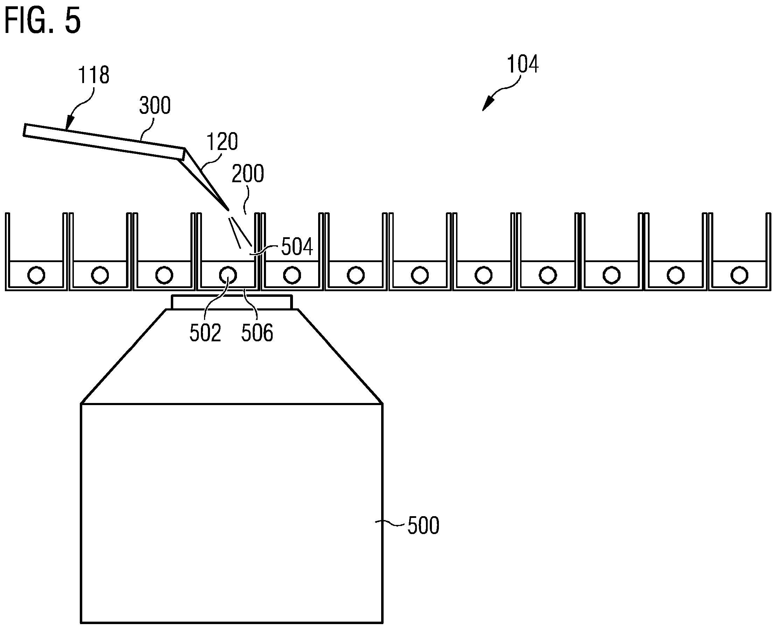

The microscope system 100 is exemplary formed as a box-type microscope having a microscope housing 102. The microscope housing 102 forms a sample chamber 104 configured to receive a sample carrier 106 in which one or more samples 502 (c.f. Figure 5) are arranged. By enclosing the sample carrier 106 inside the microscope housing 102, a precise control over the sample's 502 environment is possible, for example via an incubation control unit for controlling temperature, humidity and gas composition of the sample chamber 104. The enclosed samples 502 are also shielded against the environment, and thus both the samples 502 and the environment are protected against accidental contamination. Further, the sample chamber 104 can easily be made into an incubation chamber and/or a sterile environment, if an experiments demands it.

The sample carrier 106 is positioned atop a top surface 108 of a microscope stage 110 that is arranged below the sample chamber 104. The microscope stage 110 is movable along two orthogonal directions, i.e. the microscope stage 110 is a so called X-Y-table. Thus, moving the microscope stage 110 allows for example for selecting an individual cavity or well of the sample carrier 106 or selecting a specific region of interest of a single sample 502 for observation.

The microscope system 100 according to Figure 1 is exemplary formed as a transmitted light microscope system. Imaging system 112 for imaging the samples are exemplary arranged below the microscope stage 110 in a component space and an illumination system 114 for illuminating the samples 502 is arranged above the microscope stage 110 inside the sample chamber 104. The optical axis of the imaging system 112 and the optical axis of the illumination system 114 are aligned. Thereby, illumination light emitted by the illumination system 114 passes through the samples 502 before entering the imaging system 112. In an alternative embodiment, the positions of the imaging system 112 and the illumination system 114 may be reversed. In another alternative embodiment, both the imaging system 112 and the illumination system 114 are arranged on the same side of the microscope stage 110. Additional components such as a power source or various filters may be arranged in the component space below the sample chamber.

The microscope system 100 further comprises an injection device 116 configured to inject a liquid, such as a reagent, into the sample carrier 106. The injection device 116 comprises a needle 118 arranged inside the sample chamber 104 having a bent tip section 120 for injecting the liquid into the sample carrier 106. The injection device 116 further comprises a liquid reservoir 122 arranged outside the sample chamber 104 for storing the liquid. The liquid reservoir 122 exemplary comprises of a single container. However, the liquid reservoir 122 may also comprise two or more containers, for example disposable plasticware tubes of standardized size, each storing a different liquid. The liquid reservoir 122 is connected by a first fluid line 124 to a pump 126 exemplary formed as a syringe pump 126Alternatively, the pump 126 may be formed as a peristaltic pump or any other suited pump. The pump 126 comprises a syringe 128 having a barrel and a plunger, a motorized plunger driver, and a three-way valve 130. The motorized plunger driver is configured to move the plunger of the syringe 128, thereby either drawing a fluid into or discharging the fluid from the barrel. In a first mode of operation, the three-way valve 130 is set such that the syringe 128 can draw liquid form the liquid reservoir 122 into the barrel. In a second mode of operation, the three-way valve 130 is set such that the syringe 128 can deliver the liquid stored in its barrel to the needle 118 via a second fluid line 132. The shorter the second fluid line 132, the smaller the minimal amount of liquid that can be injected into the sample carrier 106. A further factor influencing the minimal amount of liquid that can be injected is the softness of the fluid line. A minimal amount of about 1µL to 3µL can be reached for a length of less than 100 cm.

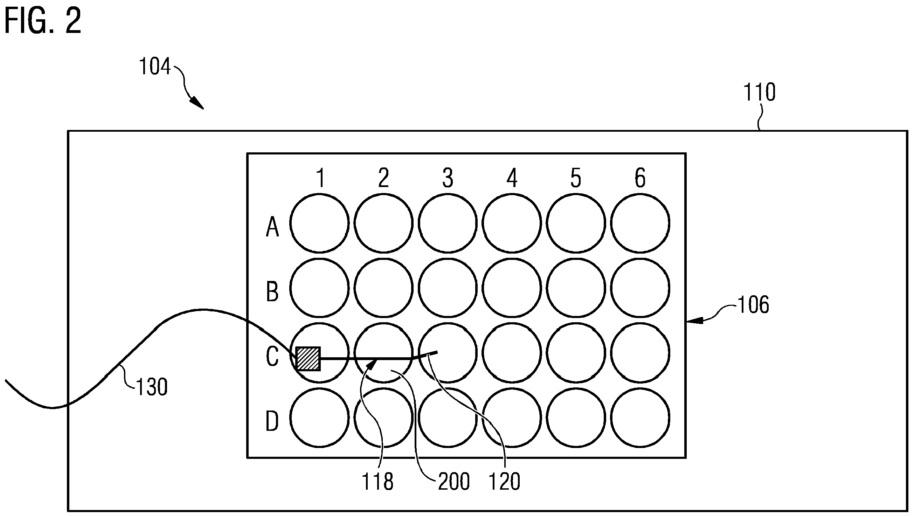

Figure 2 is a schematic top view of the sample chamber 104 of the microscope system 100 according to Figure 1.

The sample carrier 106 is arranged centrally atop the microscope stage 110 and exemplary formed as a multi well plate having 24 wells 200. The wells 200 are arranged in 4 rows and 6 columns. The rows are labelled A to D and the columns are labelled 1 to 6 in order to uniquely identify each well 200. The wells 200 are filled with an embedding medium 504 (c.f. Figure 5) in which the individual samples 502 are received. By adding a reagent in form of the liquid to the sample carrier 106, a reaction from the sample 502 is observed.

The needle 118 is arranged atop the sample carrier 106. By either moving the sample carrier 106 or the needle 118, the tip section 120 can be positioned above each well 200 of the sample carrier 106 in order to inject the liquid into the respective well 200. As can be seen from Figure 2, the angled tip section 120 is twisted slightly to one side, i.e. towards the top of Figure 2. This ensures that the needle 118 does not lie in the beam path of the illumination light and does not cast a shadow on the sample 502.

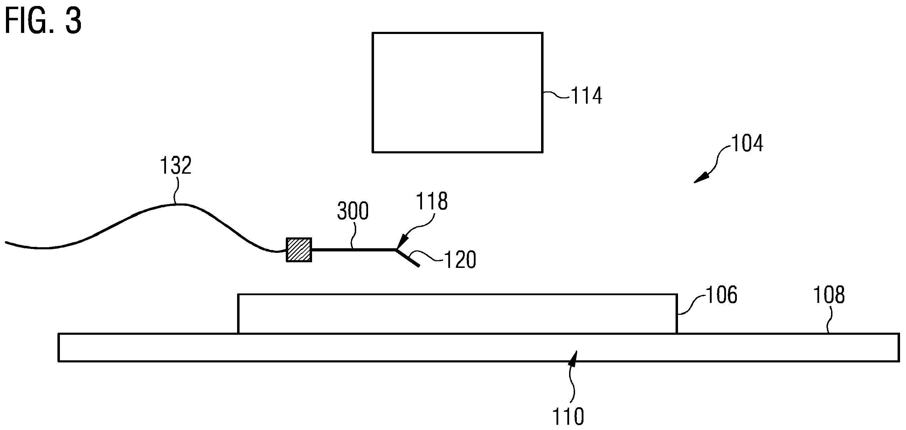

Figure 3 is a schematic front view of the sample chamber 104 of the microscope system 100 according to Figures 1 and 2.

The needle 118 comprises of a base section 300 connected to the second fluid line 132 which is parallel to the top surface 108 of the microscope stage 110, and the angled tip section 120. As can be seen in Figure 3, the angled tip section 120 and the top surface 108 of the microscope stage 110 enclose an angle of about 40°. This means that the jets will hit the surface of the embedding medium 504 at an angle of incident of about 40° as well.

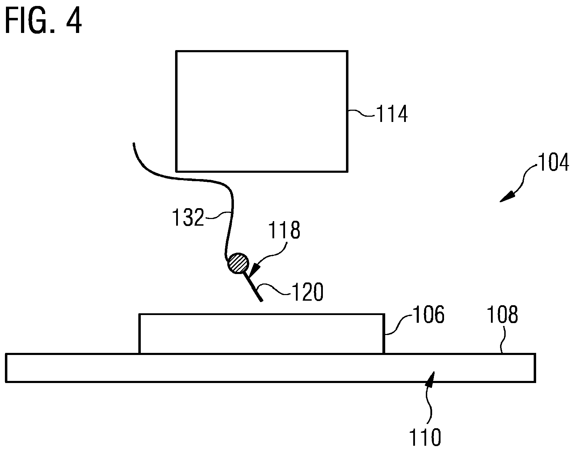

Figure 4 is a schematic side view of the sample chamber 104 of the microscope system 100 according to Figures 1 to 3. The view in Figure 4 shows the sample chamber 104 from the right side in Figure 3.

The needle 118 is arranged rotatable around the longitudinal axis of its base section 300. As can be seen in Figure 4, the angled tip section 120 is not pointing straight down but is rotated to the right in Figure 4 by about 30°. By allowing the needle 118 to be rotated, the angle of incident of the jets hitting the surface of the embedding medium 504 can be finely controlled. Typically, needle 118s have a tip section 120 that is bent by 45°, 60° or 90° corresponding to an angle of incident of 45°, 30° or 0°, respectively. If another angle of incident is needed, the tip section 120 has to be bent manually. This is both imprecise and time consuming. By providing means for rotating the needle 118, the angle of incident can be precisely and automatically controlled. Further, the tip section 120 is not located neither in the beam path of the imaging system 112 nor the illumination system 114. Thus, the tip section 120 does not cast of shadow onto the sample 502.

Figure 5 is a schematic detail view of the sample chamber 104 of the microscope system 100 according to Figures 1 to 4.

One well 200 of the sample carrier 106 is located above a detection objective 500 of the imaging system 112. The sample 502 is received in the embedding medium 504 in that well 200 and can be observed through an optically transparent bottom window 506 of the well 200. The angled tip section 120 is located directly above the well 200 that is currently observed. However, the tip section 120 does not reach into the well 200 such that the sample carrier 106 can be freely moved.

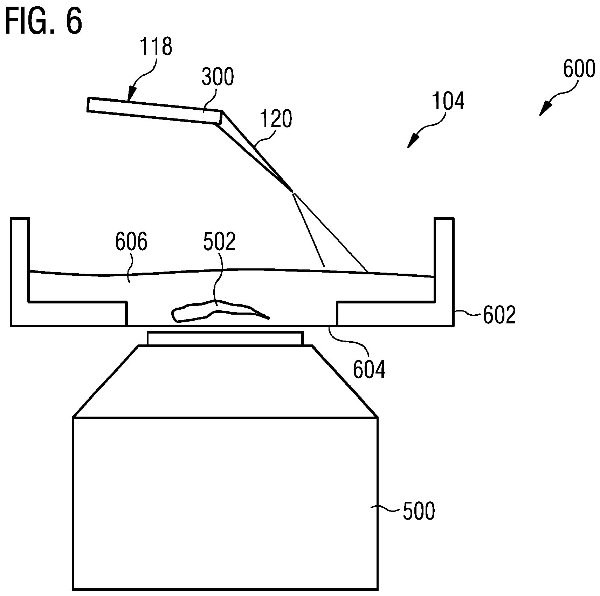

Figure 6 is a schematic detail view of the sample chamber 104 of the microscope system 600 according to another embodiment.

In the present embodiment, the sample carrier 602 is exemplary formed as a petri-dish having a transparent window portion 604 arrange at the bottom of the petri-dish. A large living specimen, for example zebrafish, C. Elegans, or Drosophila specimen, is received as the sample 502 in a nutrient solution. The angled tip section 120 is located above the sample 502 such that the jets will hit the surface of the nutrient solution 606 slightly to the side of the sample 502. The tip section 120 does not reach into the sample carrier 602 such that the sample carrier 602 can be freely moved.

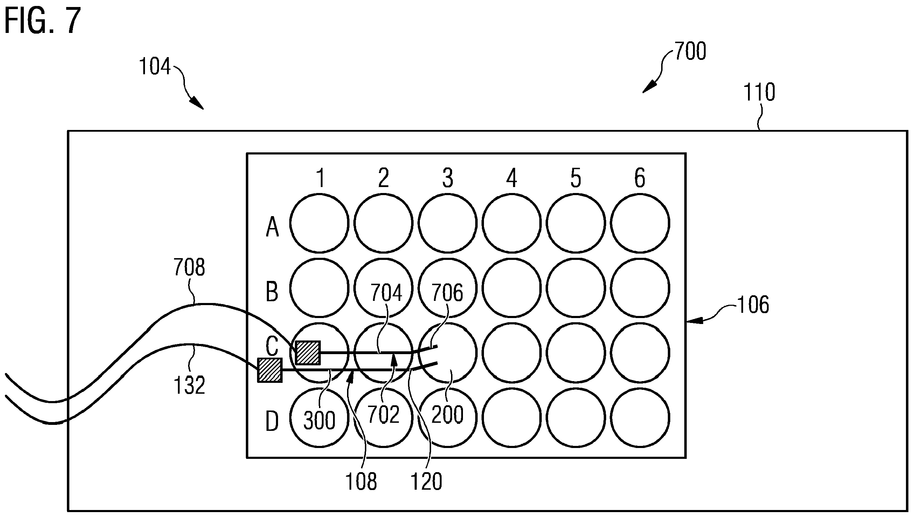

Figure 7 is a schematic top view of the sample chamber 104 of the microscope system 700 according an embodiment.

The microscope system 700 according to Figure 7 is distinguished from the microscope system 100 according to Figures 1 to 5 in having a second needle 702. The second needle 702 is arranged next to the first needle 118 such that their base sections 300, 704 are parallel. The tip sections 120, 706 of both needles 118, 702 are arranged atop one well 200 so that both needles 118, 702 can be used to inject a liquid into that particular well 200. The two needles 118, 702 are connected to the liquid reservoir 122 by a fluid line 132, 708 each and may therefore be used to inject two different liquids into the sample carrier 106, 602.

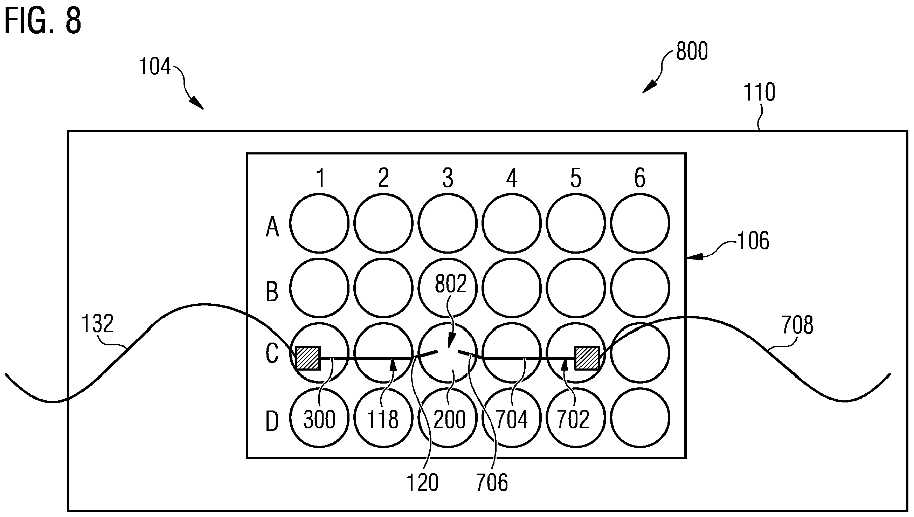

Figure 8 is a schematic top view of the sample chamber 104 of the microscope system 800 according an embodiment.

The microscope system 800 according to Figure 8 is distinguished from the microscope system 700 according to Figure 7 in that the second needle 702 is arranged opposite the first needle 118. The two needles 118, 702 are arranged such that their base sections 300, 704 are located on a common axis. The tip sections 120, 706 are arranged such that a gap 802 is formed between the two needles 118, 702 and above the well 200. This gap 802 allows the observation and illumination of the sample 502 arranged in the well 200.

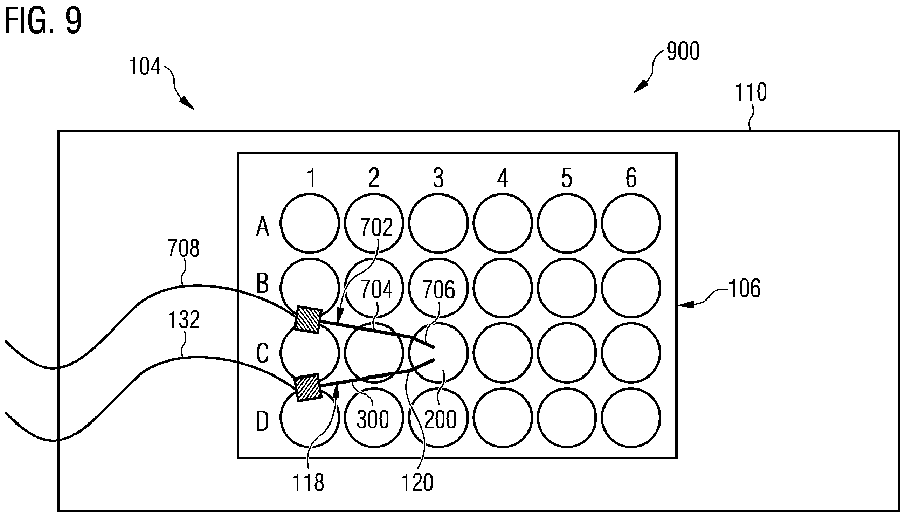

Figure 9 is a schematic top view of the sample chamber 104 of the microscope system 900 according an embodiment.

The microscope system 900 according to Figure 9 is distinguished from the microscope system 700 according to Figure 7 in that the first and second needles 118, 702 are angled towards each other. The base sections 300, 704 of the two needles 118, 702 enclose an angle of about 25°. Additionally, the tip sections 120, 706 are bent towards each other.

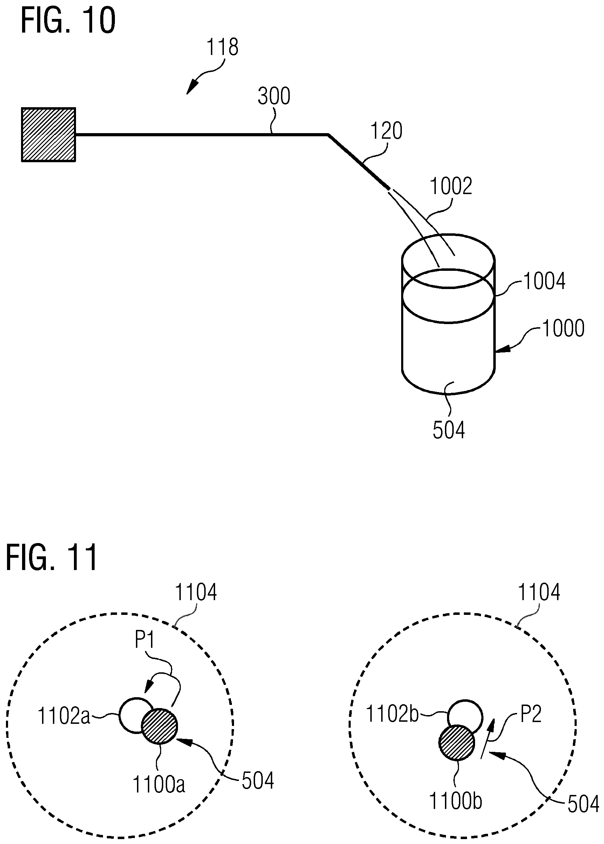

Figure 10 is a schematic view of a sample carrier 1000 and the tip section 120 of the needle 118.

The liquid that is expelled from the tip section 120 towards the sample carrier 106, 602 forms a jet 1002. As can be seen in Figure 10, the jet 1002 widens with distance from the tip section 120 due to dispersion, which might lead to loss of liquid and thereby inaccurate injection volumes. It may therefore be advantageous to keep the distance between the tip section 120 and the surface 1004 of the embedding medium 504 as short as possible. As can also be seen in Figure 10, the jet 1002 is bent slightly downwards due to gravity.

Figure 11 shows two schematic top views of the sample 504.

The two views illustrate the movement of the sample 502 due to turbulence cause by the injection of the jet 1002. The initial position 1100a, 1100b of the sample 502 is show as a solid black circle. The final position 1102a, 1102b of the sample 502 is indicated by a white circle having a solid black border. The field of view 1104 of the microscope system 100, 600, 700, 800, 900 is shown as a large circle having a dashed black border. A first view shows a semi-circular motion caused by the injection of the jet 1002. The sample 502 is moved along a semi-circle from its original position 1100a to its final position 1102a as shown by a first arrow P1. A second view shows a linear motion caused by the injection of the jet 1002. The sample 502 is moved along a straight line from its original position 1100b to its final position 1102b as shown by a second arrow P2. The distance between the initial position and the final position is smaller than the diameter of the sample 502, and much smaller than the field of view 1104 of the microscope system 100.

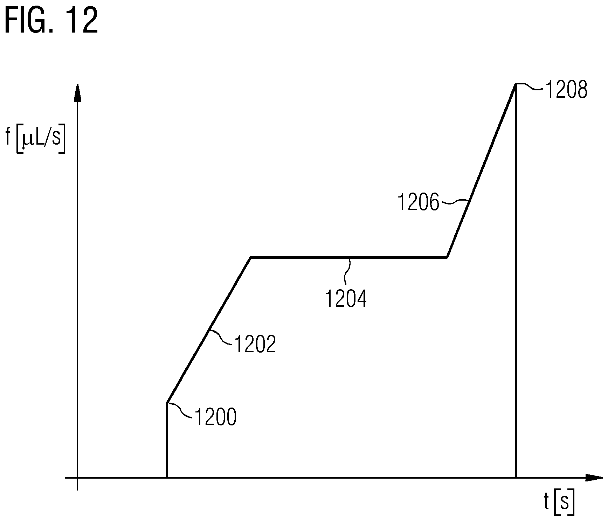

Figure 12 is a graph showing the flow speed of the liquid expelled from the tip section 120 over time.

The abscissa shows time t in seconds and the ordinate shows the flowrate f in µL per second. As can be seen in Figure 12, the injection of the liquid is divided into five distinct parts 1200, 1202, 1204, 1206, 1208 having different flow parameters. Most syringe pumps allow the user to set the parameters for these five parts. A first part 1200 called start flow corresponds to the initial flow speed of 10 µL/s. A second part 1202 called slope up corresponds to an increase in flow speed until a flow speed of 95 µL/s is reached. During the second part 1202, the flow speed increases by 8 µL/s per second. A third part 1204 called top flow corresponds to the flow speed of 95 µL/s. During a fourth part called slope down 1206 the flow speed is changed by 40 µL/s per second until a final flow speed of 150 µL/s is reached. A fifth part 1208Ð called end flow corresponds to the final flow speed of 150 µL/s.

While exact values of flow speed during the start flow, slope up, and end flow have very little influence, the values of flow speed during the top flow and the slope down influence whether the sample 502 is moved during the injection and whether a clean drop break-off can be achieved. The flow speed during the top flow has the most influence on whether the sample 502 is moved and should not be above 200 µL/s. The change in flow speed during the slope down may be as slow as 8 µL/s per second. However, a slow change only lead to a clean drop break-off in combination with a higher flow speed during the end flow of about 350 µL/s.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: Microscope system
- 102: Microscope housing
- 104: Sample chamber
- 106: Sample carrier
- 108: Top surface
- 110: Microscope stage
- 112: Imaging system
- 114: Illumination system
- 116: Injection device
- 118: Needle
- 120: Tip section
- 122: Liquid reservoir
- 124: Fluid line
- 126: Pump
- 128: Syringe
- 130: Valve
- 132: Fluid line
- 200: Well
- 300: Base section
- 500: Objective
- 502: Sample
- 504: Embedding medium
- 506: Window
- 600: Microscope system
- 602: Sample carrier
- 604: Window
- 606: Nutrient solution
- 700: Microscope system
- 702: Needle
- 704: Base section
- 706: Tip section
- 708: Fluid line
- 800: Microscope system
- 802: Gap
- 900: Microscope system
- 1000: Sample carrier
- 1002: Jet
- 1004: Surface
- 1100a, 1100b: Initial position
- 1102a, 1102b: Final position
- 1104: Field of view
- 1200,1202, 1204, 1206,: Part
- 1208 P1, P2: Arrow

## Claims

1. A microscope system (100, 600, 700, 800, 900), comprising:
a microscope stage (110) having a top surface (108) configured to have a sample carrier (106, 602, 1000) arranged thereon, the sample carrier (106, 602, 1000) being configured to receive at least one sample (502),
an imaging system (112) configured to image the sample (502), and
an injection device (116) configured to inject a predetermined amount of a liquid into the sample carrier (106, 602, 1000) by injecting multiple successive and temporally spaced jets (1002) of the liquid into the sample carrier (106, 602, 1000), each jet (1002) comprising a predetermined portion of the amount of liquid.

2. The microscope system (100, 600, 700, 800, 900) according to claim 1 having a control unit configured to predetermine at least one control parameter, in particular at least one of the following the amount of a portion, the number of jets (1002), and the interval between two immediately successive jets (1002); and to control the injection of the jets (1002) based on the at least one control parameter.

3. The microscope system (100, 600, 700, 800, 900) according to claim 2, wherein the control unit comprises a memory element; wherein the memory element comprises a look-up table which correlates at least one sample carrier (106, 602, 1000) information with the at least one control parameter; and wherein the control unit is configured to predetermine the at least one control parameter based a user input of a value of the at least one sample carrier (106, 602, 1000) information, and based on the look-up table.

4. The microscope system (100, 600, 700, 800, 900) according to any one of claims 2 or 3, wherein the control unit is configured to predetermine the at least one control parameter such that the sample (502) is not moved inside or out of the field of view (1104) of the imaging system (112) during the injection of the jets (1002).

5. The microscope system (100, 600, 700, 800, 900) according to any one of the preceding claims, wherein the imaging system (112) is configured to capture at least one image of the sample (502) during the injection of the liquid.

6. The microscope system (100, 600, 700, 800, 900) according to any one of the preceding claims, wherein each portion of liquid comprises less than 10 µL of the liquid.

7. The microscope system (100, 600, 700, 800, 900) according to any one of the preceding claims, wherein the interval between two immediately successive jets (1002) is at least 0.5 s and at most 1.5 s.

8. The microscope system (100, 600, 700, 800, 900) according to any one of the preceding claims, wherein the injection device (116) comprises at least one needle (118) which has an angled tip section (120).

9. The microscope system (100, 600, 700, 800, 900) according to claim 8, wherein the tip section (120) of the needle (118) is bent at least 30° and smaller than 90°.

10. The microscope system (100, 600, 700, 800, 900) according to any one of the claims 8 or 9, wherein the tip section (120) of the needle (118) and the top surface (108) of the microscope stage (110) enclose an angle of at least 10° and at most 85°.

11. The microscope system (100, 600, 700, 800, 900) according to claim 10, wherein the tip section (120) of the needle (118) and the top surface (108) of the microscope stage (110) enclose an angle of at least 10° and at most 50°.

12. The microscope system (100, 600, 700, 800, 900) according to any one of the preceding claims, wherein a flow rate of the liquid is at least 5 µL/s and at most 250 µL/s.

13. The microscope system (100, 600, 700, 800, 900) according to claim 11, wherein the flow rate of the liquid is at least 10 µL/s and at most 100 µL/s.

14. The microscope system (100, 600, 700, 800, 900) according to any one of the preceding claims, wherein the injection device (116) comprises a temperature control unit configured to control the temperature of the liquid.

15. The microscope system (100, 600, 700, 800, 900) according to any one of the preceding claims comprising a box-type microscope housing (102) defining a sample chamber (104); wherein the housing has a door for providing access to the sample chamber (104); wherein the microscope stage (110) is arranged below the sample chamber (104); and wherein the sample carrier (106, 602, 1000) is received inside the sample chamber (104).

16. A method for imaging a sample (502) with a microscope system (100, 600, 700, 800, 900), comprising:
arranging the sample (502) inside a sample carrier (106, 602, 1000);
arranging the sample carrier (106, 602, 1000) on top of a microscope stage 110 of the microscope system (100, 600, 700, 800, 900);
injecting a predetermined amount of a liquid into the sample carrier (106, 602, 1000) by injecting multiple successive and temporally spaced jets (1002) of the liquid into the sample carrier (106, 602, 1000), each jet (1002) comprising a predetermined portion of the amount of liquid;
capture at least one image of the sample (502) with an imaging system (112) of the microscope system (100, 600, 700, 800, 900) during the injection of the liquid.

17. The method according to claim 16, comprising:
predetermining at least one control parameter, in particular at least one of the following the amount of a portion, the number of jets (1002), and the interval between two immediately successive jets (1002);
performing the injection of the jets (1002) based on the at least one control parameter.

18. The method according to claim 17, wherein the at least one control parameter is predetermined based on a user input of a value of at least one sample carrier (106, 602, 1000) information, and based on a look-up table which correlates the at least one sample carrier (106, 602, 1000) information with the at least one control parameter.

19. The method according to any one of claims 17 or 18, wherein the at least one control parameter is predetermined such that the sample (502) is not moved inside or out of the field of view (1104) of the imaging system (112) during the injection of the jets (1002).

20. The method according to any one of the claims 16 to 19, wherein each portion of liquid comprises less than 10 µL of the liquid.

21. The method according to any one of the claims 16 to 20, wherein the interval between two immediately successive jets (1002) is at least 0.5 s and at most 1.5 s.

22. The method according to any one of the claims 16 to 21, wherein the injection is performed with at least one needle (118) which has an angled tip section (120).

23. The method according to claim 22, wherein the tip section (120) of the needle (118) is bent at least 30° and less than 90°.

24. The method according to any one of the claims 16 to 23, wherein the jets (1002) are injected into the sample carrier (106, 602, 1000) at an angle of at least 10° and at most 85° with respect to the top surface (108) of the microscope stage (110).

25. The method according to claim 24, wherein the jets (1002) are injected into the sample carrier (106, 602, 1000) at an angle of at least 10° and at most 50° with respect to the top surface (108) of the microscope stage (110).

26. The method according to any one of the claims 16 to 25, wherein a flow rate of the liquid is at least 5 µL/s and at most 250 µL/s,

27. The method according to claim 26, wherein the flow rate of the liquid is at least 10 µL/s and at most 100 µL/s.
